# EUROPEAN PATENT SPECIFICATION

(11) **EP 3 741 214 B1**
(45) Date of publication and mention of the grant of the patent: **14.08.2024**
(21) Application number: 20175562.6
(22) Date of filing: 19.05.2020
(51) Int. Cl.: A01M 7/00, A01M 21/04, B64U 101/30, G06Q 50/02, G06T 7/00

(54) **METHOD FOR PLANTATION TREATMENT BASED ON IMAGE RECOGNITION**
VERFAHREN ZUR PLANTAGENBEHANDLUNG BASIEREND AUF BILDERKENNUNG
PROCÉDÉ DE TRAITEMENT DE PLANTATIONS BASÉ SUR LA RECONNAISSANCE D'IMAGES

(30) Priority: 20.05.2019 EP 19175363
(43) Date of publication of application: 25.11.2020
(73) Proprietor: BASF Agro Trademarks GmbH, 67056 Ludwigshafen am Rhein (DE)
(72) Inventor: Janssen, Ole, 50678 Köln (DE); Tempel, Matthias, 51368 Leverkusen (DE); Kiepe, Björn, 50678 Köln (DE); Wahabzada, Mirwaes, 50678 Köln (DE)
(74) Representative: BASF IP Association

(56) References cited:
- WO-A1-2019/081375
- CN-A- 106 585 992
- CN-A- 106 742 004
- CN-A- 106 956 778
- CN-A- 109 122 633
- CN-A- 109 258 601
- US-A1- 2012 195 496
- US-A1- 2019 096 058
- D A SHAIKH ET AL: "Intelligent Autonomous Farming Robot with Plant Disease Detection using Image Processing", INTERNATIONAL JOURNAL OF ADVANCED RESEARCH IN COMPUTER AND COMMUNICATION ENGINEERING, vol. 5, no. 4, 1 April 2016 (2016-04-01), INDIA, pages 1012 - 1016, XP055466047, ISSN: 2319-5940, DOI: 10.17148/IJARCCE.2016.54248
- CHRISTIAN SCHOLZ ET AL: "Camera-based selective weed control application module ("Precision Spraying App") for the autonomous field robot platform BoniRob", PROCEEDINGS INTERNATIONAL CONFERENCE OF AGRICULTURAL ENGINEERING, ZURICH, 1 July 2014 (2014-07-01), pages 1 - 8, XP055466485

## Description

### FIELD OF INVENTION

The present invention relates to a method and a treatment device for plantation treatment of a plantation field, as well as a controlling device for such a treatment device.

### BACKGROUND OF THE INVENTION

The general background of this invention is the treatment of plantation in an agricultural field. The treatment of plantation, in particular the actual crops, also comprises the treatment of weed in the agricultural field, the treatment of the insects in the agricultural field as well as the treatment of pathogens in the agricultural field.

Agricultural machines or automated treatment devices, like smart sprayers, treat the weed, the insects and/or the pathogens in the agricultural field based on ecological and economical rules. In order to automatically detect and identify the different objects to be treated image recognition is used.

CN109122633A discloses a neural network decision based variable-rate precision spraying device of plant protection drone and a corresponding control method.

However, agricultural machines operate in very heterogeneous conditions. This includes illumination, but also phenotypical appearances of crops, weeds, insects and pathogens in the agricultural field. This depends on different genotypes, plasticity of the weeds to different environmental conditions and differences in the host plantations for pathogens (i.e. different defense mechanisms, different color of the variety) or different canopy structures after weather events (wind, rain, washing of the cuticula, damaging leaves). All this is a challenge for image recognition algorithms, in particular if a real time decision is needed on a machinery taking images and making application decisions, like treating the plantation by triggering a spraying nozzle, at the same time.

### SUMMARY OF THE INVENTION

It would be advantageous to have an improved method for plantation treatment based on image recognition.

The object of the present invention is solved with the subject matter of the independent claims, wherein further embodiments are incorporated in the dependent claims. It should be noted that the following described aspects and examples of the invention apply also for the method, the treatment device and the controlling device.

According to a first aspect, the method for plantation treatment of a plantation field comprises:
taking an image of a plantation of a plantation field;
recognizing items on the taken image by running a first image recognition analysis of a first complexity on the taken image based on a stored parametrization of a machine learning algorithm;
identifying an unsatisfying image analysis result;
determining ambient data corresponding to the taken image;
recognizing items on the taken image by running a second image recognition analysis of a second complexity on the image based on the ambient data on an external device, wherein the second complexity is higher than the first complexity;
determining an improved parametrization based on the second image recognition analysis for the machine learning algorithm for improving the first image recognition analysis; and
controlling - via a treatment control interface - a treatment arrangement of a treatment device based on the first image recognition analysis on the taken image based on the updated improved parametrization.

According to an exemplary embodiment controlling a treatment arrangement of a treatment device based on the first image recognition analysis with improved parametrization can be conducted after a certain time period (TP) after controlling a treatment arrangement of a treatment device based on the first image recognition analysis with the stored (initial) parametrization has started, wherein the time period is selected from a group, the group consisting of 0 to 100 seconds, 0 to 100 minutes, 0 to 100 hours, 0 to 10 days, 0 to 10 weeks, and 10 to 12 months.

The time period (TP) may be in further examples:
- in the range of 0 to 100 seconds, for instance at least 10 milliseconds, for example less than 1 second, less than 2 seconds, less than 3 seconds, less than 5 seconds, less than 10 seconds, less than 20 seconds, less than 30 seconds, or less than 60 seconds; or
- in the range of 0 to 100 minutes, for instance at least 1 second, for example less than 1 minute, less than 2 minutes, less than 3 minutes, less than 5 minutes, less than 10 minutes, less than 20 minutes, less than 30 minutes, or less than 60 minutes; or
- in the range of 0 to 100 minutes, for instance at least 10 milliseconds or 1 second, for example less than 1 minute, less than 2 minutes, less than 3 minutes, less than 5 minutes, less than 10 minutes, less than 20 minutes, less than 30 minutes, or less than 60 minutes; or
- in the range of 0 to 100 hours, for instance at least 10 milliseconds or 1 second or 1 minute, for example less than 1 hour, less than 2 hours, less than 3 hours, less than 5 hours, less than 10 hours, less than 20 hours, less than 30 hours, or less than 60 hours; or
- in the range of 0 to 10 days, for instance at least 10 milliseconds or 1 second or 1 minute, for example less than 1 day, less than 2 days, less than 3 days, less than 4 days, less than 5 days, or less than 7 days; or
- in the range of 0 to 10 weeks, for instance at least 10 milliseconds or 1 second or 1 minute, for example less than 1 week, less than 2 weeks, less than 3 weeks, less than 4 weeks, less than 5 weeks, or less than 7 weeks; or
- in the range of 0 to 12 months, for instance at least 10 milliseconds or 1 second or 1 minute, for example less than 1 month, less than 2 months, less than 3 months, less than 4 months, less than 5 months, less than 7 months, or less than 9 months.

Recognizing, as used herein, comprises the state of detecting an object, in other words knowing that at a certain location is an object but not what the object exactly is, and the state of identifying an object, in other words knowing the exact type of object that has been detected.

An unsatisfying image analysis result, as used herein, can be understood as a result of an image recognition analysis, in which the result does not meet predetermined criteria. Preferably, such an unsatisfying result comprises that an image analysis results in a negative or an uncertain result. An uncertain result preferably comprises that the image recognition analysis detects an item on the image, but cannot identify the item. Further preferably, an uncertain result preferably comprises that an image recognition analysis is uncertain, if the identification made is correct. An uncertain result may for example be an identification which allows the determination of a weed group, but not a weed species. With this respect, the first image recognition with the initially stored parametrization may reveal the weed group, but not the weed species, whereas the second image recognition with the updated parametrization may reveal not only the weed group, but also the weed species. The weed group may be any weed classification which is on a higher level than the weed species. The weed group may be for example a weed family (e.g. the family Poaceae), a weed tribe (e.g. one of the tribes Aveneae, Bromeae, Paniceae and Poeae), or a weed genus (e.g. Alopecurus) in the biological sense. The weed species is the species of the weed in the biological sense (e.g. *Alopecurus myosuroides* = black-grass).

Ambient information or data, as used herein, can be understood as all additional data of the field situation and/or the surroundings of the plantation field. It may include historical data of the field or permanent properties of the field, like soil composition. It may also include statistical weather data for the location of the plantation field.

The improved parametrization directly improves first image recognition analysis but also improves the self learning capabilities of the machine learning algorithm providing the respective parametrization for the first image recognition analysis.

Thus, the first image recognition analysis iteratively or gradually becomes more resistant to external factors like weather, illumination and/or damage of the plantation. Furthermore, in field image recognition performed on the fly can be improved, whenever uncertainties in the image recognition arise. Such improvement increases detection accuracy and hence reduces the amount of herbicides, insecticides and/or fungicides needed for cultivating the crop and maximizing yield. Therefore, the environment can be relieved and costs can be reduced.

The improved parametrization preferably is fed back for the first image recognition analysis as fast as possible. In realistic conditions, the timeframe for this is about several minutes. This procedure would be the case for embedded telematics. Additionally, the improved parametrization can also be fed back time delayed, for example for the start of the new farming season. In this case the improved parametrization would be provided as an annual service. In any case, the machine learning algorithm can only be improved when being provided with the improved parametrization.

The plantation treatment preferably comprises protecting a crop, which is the cultivated plantation on the plantation field, destroying a weed that is not cultivated and may be harmful for the crop, in particular with a herbicide, controlling the insects on the crop and/or the weed, in particular with an insecticide, and controlling any pathogen like a disease, in particular with a fungicide.

The treatment arrangement, as used herein, or also called control technology, preferably comprises chemical, mechanical and/or electric control technology. Chemical control technology preferably comprises at least one means, particularly a spray gun, for application of insecticides and/or herbicides. Mechanical control technology preferably comprises means for sucking, pulling and/or stamping plants and/or insects. Electric control technology comprises applying electric field or current flow, e.g. as provided by Zasso, and/or radiation, particularly laser, based means for controlling plants and/or insects.

The treatment arrangement is controlled based on the first image recognition analysis. In other words, based on the first image recognition analysis it is decided if a plantation, insect and/or pathogen survives or is destroyed. For instance, when the first image recognition analysis identifies a weed that is harmful to the cultivated crop on the plantation field, the treatment arrangement is configured to destroy the weed in order to protect the crop. For instance, when the first image recognition analysis identifies an insect that is harmful to the cultivated crop on the plantation field, the treatment arrangement is configured to eliminate the insect in order to protect the crop.

The machine learning algorithm may comprise decision trees, naive bayes classifications, nearest neighbors, neural networks, convolutional or recurrent neural networks, generative adversarial networks, support vector machines, linear regression, logistic regression, random forest and/or gradient boosting algorithms.

Preferably, the machine learning algorithm is organized to process an input having a high dimensionality into an output of a much lower dimensionality. Such a machine learning algorithm is termed "intelligent" because it is capable of being "trained." The algorithm may be trained using records of training data. A record of training data comprises training input data and corresponding training output data. The training output data of a record of training data is the result that is expected to be produced by the machine learning algorithm when being given the training input data of the same record of training data as input. The deviation between this expected result and the actual result produced by the algorithm is observed and rated by means of a "loss function". This loss function is used as a feedback for adjusting the parameters of the internal processing chain of the machine learning algorithm. For example, the parameters may be adjusted with the optimization goal of minimizing the values of the loss function that result when all training input data is fed into the machine learning algorithm and the outcome is compared with the corresponding training output data. The result of this training is that given a relatively small number of records of training data as "ground truth", the machine learning algorithm is enabled to perform its job well for a number of records of input data that higher by many orders of magnitude.

Preferably, the steps of recognizing items on the taken image by running a second image recognition analysis of a second complexity on the image based on the ambient data on an external device, wherein the second complexity is higher than the first complexity and determining an improved parametrization based on the second image recognition analysis for the machine learning algorithm for improving the first image recognition analysis are executed by an external server, in particular a cloud server. The complexity may be higher when having for example the option to distinguish different species of weed. The complexity may be lower when having for example only the option to distinguish weeds from beneficial plants. The complexity can be reduced by for example reducing the nodes in a model to make the computational procedure faster. Further preferably, the steps of taking an image of a plantation of a plantation field, recognizing items on the taken image by running a first image recognition analysis of a first complexity on the taken image based on a stored parametrization of a machine learning algorithm, identifying an unsatisfying image analysis result and controlling a treatment arrangement of a treatment device based on the first image recognition analysis are executed by an embedded software, in particular by an embedded software on an agricultural machine.

In a preferred embodiment, the ambient data comprises a type of a field crop and/or a growth stage of the field crop and/or illumination characteristics and/or weather conditions.

In one embodiment, the weather condition, preferably in form of current weather data, is recorded on the fly and/or on the spot. Such current weather data may be generated by different types of weather sensors mounted on the treatment device and/or one or more weather station(s) placed in or near the field. Hence, the current weather data may be measured during movement of the treatment device on the plantation field. Current weather data refers to data that reflects the weather conditions at the location in the plantation field a treatment decision is to be made. Weather sensors are for instance rain, UV or wind sensors.

The type of field crop of the ambient data preferably is not a real time data but does relate to a general information about the plantation field, in particular the type of crop that this specific plantation field is used for cultivating. Thus, it is known which type of crop should generally be identified by the image recognition analysis.

The growth stage of the field crop is known from the time of seeding when cultivating the plantation field. Therefore, an expected growth stage of the field crops can be determined.

The illumination characteristics preferably comprise information about the current time and current the angle of the sun to the illuminated plantation field.

The weather conditions preferably comprise the current weather as well as consequences thereof, in particular fog and/or humidity.

Preferably, the ambient data is at least partially provided by an external service provider.

The ambient data preferably can be used as sources for unexpected image information detected by the image recognition analysis. For example, reflections from water on the plantation can be deducted or unexpected colors of the plantation based on unusual illumination can be adjusted in order to improve the image recognition.

Preferably, the machine learning algorithm is trained on the basis of a plurality of images, in particular images containing imagery of at least one type of crop, weed, insect and/or pathogen.

In a preferred embodiment, the unsatisfying image analysis result is indicated by a low confidence of the machine learning algorithm.

A low confidence case comprises the first image recognition analysis based on the stored parametrization of the machine learning algorithm being uncertain, if an object to be identified is present at all or that an object is detected and therefore present but cannot be identified. The confidence may be defined as the probability that a particular weed e.g. belongs to a specific species. For example, a confidence level of 60% means that the system delivers a result with a probability of 0.6 that the corresponding weed belongs to a specific species/···/category.

The confidence level can be adjusted according to the use case and/or according to the type of treatment. Preferably, the confidence level is below 90%, more preferably below 80%, most preferably below 70%, particularly preferably below 60%, particularly more preferably below 50%, particularly most preferably below 40%, for example preferably below 30%, for example more preferably below 20%, for example most preferably below 10%..

For example, a confidence level of 60% means that the system delivers a result with a probability of 0.6 that the corresponding weed belongs to a specific species/···/category.

More details on the confidence level can be found on: https://en.wikipedia.org/wiki/Artificial_neural_network#Generalization_and_statistics

In a preferred embodiment, the method comprises buffering the image and/or the ambient data before running the second image recognition analysis.

The second image recognition analysis is based on the image, in particular all the raw image data of the taken image, and the ambient data. However, the second image recognition analysis does not have to be provided with the information in real-time. The current image and ambient data are preferably stored or buffered as a snapshot of the current situation. The stored data then can be provided to the external device at any given time.

In a preferred embodiment, the buffered image and/or buffered ambient data are transmitted to the external device, preferably an internet server, based on the availability of a transmission technology, in particular a cell phone coverage, an idle service and/or a WLAN connection.

For example, the transmission of the buffered image and buffered ambient data to the external device is delayed as long as there is no transmission technology available. Preferably, the transmission to the external device is triggered by a trigger signal. The trigger signal is preferably based on a re-availability of a transmission technology. In other words, when the transmission technology is available again, a trigger signal is generated, triggering the transmission of the buffered image and buffered ambient data to the external device. Alternatively, the trigger signal is queued, until the transmission technology is available again.

Alternatively, the trigger signal is also based on a predetermined condition, for example a predetermined time frame for buffering and transmitting and/or a predetermined amount of buffered data, before transmitting the buffered data to the external device. In other words, the trigger signal is only generated, when a predetermined time and/or amount of buffering data has been executed.

The trigger signal is preferably either generated in the control device or generated externally and provided to the control device via a communication technology interface, further preferably providing the trigger signal to the buffer interface.

Cultivated plantation fields are often not supplied by a transmission technology that has offers enough throughput to transmit the taken image and the ambient data to the external device. Therefore, the image and the ambient data are preferably buffered and preferably collected before being transmitted to the external device. If the transmission technology however is stable and powerful enough and no collecting of several unsatisfying image analysis result is required, the image and the ambient data can be directly transmitted to the external device without buffering.

In a preferred embodiment, the second image recognition analysis is trained based on additional data sources, preferably smart phone apps and/or drone imagery, wherein preferably the additional data sources provide geographical information and/or expected phenotypical differences between regions.

Preferably, the second image recognition analysis is based on a parametrized model, wherein the parametrized model is based on and/or trained with additional data sources.

Preferably, the second image recognition analysis considers a parametrization of a higher complexity than that of the first image recognition analysis, which results from e.g. a larger number of parameters to be considered for an algorithm. This requires more computational power than the first image recognition analysis. Preferably, the second image recognition analysis of a second complexity has a higher complexity than the first image recognition analysis of a first complexity as far as the second image recognition analysis requires more computational power than the first image recognition analysis .

Preferably, the additional data sources at least partially comprise an external service provider.

The second image recognition analysis it not only technically more complex than the first image recognition analysis, but preferably also is provided with more diverse input data at the training stage. Thus, the second image recognition analysis is able to formulate additional predictions in order to recognize objects on the provided image. For example, the external device is provided with expected phenotypical differences between regions. Thus, the same type of crop may have a different appearance depending on the region it is cultivated. Therefore, the second image recognition analysis can consider this difference and improve the recognition analysis and identify an object as a cultivated crop that the first image recognition analysis could only detect but not identify.

In a preferred embodiment, the second image recognition analysis is based on a neural network, in particular a neural network with more layers and/or more nodes than the neural network of the first image recognition algorithm and/or different more complex algorithms for background segmentation than the first image recognition analysis.

Preferably, the first image recognition analysis is based on a compressed neural network. The compressed neural network is based on a model, which only includes essential nodes for decision-making. The essential nodes relate to nodes, which pass a predetermined threshold for activating the node during the training of the model. The lower number of nodes lead to a lower complexity.

The model complexity can be considered as a counting of the total amount of learnable parameters. Specifically, a measure for the model complexity may be the parameter file in terms of MB for the considered models. This information may be useful for understanding the minimum amount of GPU memory required for each model.

A total memory consumption may include all the memory that is allocated, i.e. the memory allocated for the network model and the memory required while processing a batch.

A computational complexity may be defined as a measure of the computational cost of each DNN model considered using the floating-point operations (FLOPs) in a number of multiply-adds. More in detail, multiply-adds are counted as two FLOPs because, in many recent models, convolutions are bias-free and it makes sense to count multiply and add as separate FLOPs.

Inference time per image may be measured in terms of milliseconds.

Details can be taken from IEEE Access, vol 4/2018: "Benchmark Analysis of Representative Deep Neural Network Architectures" of Simone Bianco, Remi Cadene, Luigi Celona and Paolo Napoletano, DOI: 10.1109/ACCESS.2018.2877890.

For example, the complexity in the meaning of the invention includes the above referenced model complexity. In an example the complexity in the meaning of the invention includes the above referenced total memory consumption. For example, the complexity in the meaning of the invention includes the above referenced computational complexity. In an example, the complexity in the meaning of the invention includes the above referenced inference time per image. In an example, the complexity in the meaning of the invention includes at least two of the above referenced aspects of the model complexity, the total memory consumption, the computational complexity and inference time per image. For example, the complexity in the meaning of the invention includes the model complexity, the total memory consumption, the computational complexity and inference time per image.

In a preferred embodiment, the neural network of the first image recognition algorithm is based on the neural network of the second image recognition algorithm. Further preferred, the neural network of the first image recognition algorithm is a compressed version of the neural network of the second image recognition algorithm. This may be achieved by elimination of nodes in the layer(s) of the neural network of the second image recognition algorithm, which leads to a lower complexity.

Preferably, the external device has more computational power than the device used on the plantation field for running the first image recognition analysis. Further preferred the external device is configured to compress the neural network of the second image recognition algorithm. The external device may be a central computation unit CCU. The CCU may be positioned on the farming machine, but separate from a control loop processing the first image recognition. The data transfer may be conducted by a wired connection. The CCU may also be positioned on site, e.g. beside an agricultural field. In this case the data transmission may be conducted by radio transmission. The CCU may also be positioned remote on a farmer's head quarter (farm). In this case the data transmission can be conducted by radio transmission from the field or by transferring/exchanging data when returning from the field, either by wire or wireless. The CCU may also be positioned elsewhere in the world. In this case the data transmission may be conducted by any LAN or Wifi connection, either from the field or from an access point when returning from the field. The delay between requesting for an updated parametrization and applying the updated parametrization may depend on the expected response time and the access to the CCU. In case the CCU is on the farming machine, the response time may be short, i.e. within seconds or shorter. In case the CCU is remote, e.g. elsewhere in the world, and the internet access is bad for the farming machine, the response time may be some days, even weeks, so that updated parametrization may be applied e.g. weeks or months later, even in the following season.

According to a second aspect, a controlling device for a treatment device for plantation treatment of a plantation of a plantation field, comprises an image interface being adapted for receiving an image of a plantation of a plantation field, a treatment control interface, an image recognition unit being adapted for recognizing items on the taken image by running a first image recognition analysis of a first complexity on the image based on a stored parametrization of a machine learning algorithm. The image recognition unit is adapted for identifying an unsatisfying image analysis result. The image recognition unit is adapted for determining ambient data corresponding to the taken image. The treatment device comprises a communication interface being adapted for transmitting the taken image and the determined ambient data to an external device being adapted for recognizing items on the taken image based on the ambient data, wherein the second complexity is higher than the first complexity. The communication interface is adapted for receiving an improved parametrization for the machine learning algorithm, e.g. a first machine learning algorithm, for improving the first image recognition analysis from the external device. The treatment device comprises a controlling unit being adapted for generating a treatment controlling signal for a treatment arrangement of a treatment device based on the improved first image recognition analysis. The controlling unit is adapted for outputting the treatment controlling signal to the treatment control interface.

Preferably, the ambient data is provided to the image recognition unit from a further external unit and/or a further internal unit like a data storage.

In a preferred embodiment, the controlling device comprises a machine learning unit, being adapted for indicating an unsatisfying image analysis result by a low confidence of the machine learning algorithm.

In a preferred embodiment, the controlling device comprises a buffer interface, being configured for transmitting to and receiving from a buffer the image and the ambient data before them being transmitted to the external device.

In a preferred embodiment, the communication interface is adapted for transmitting the buffered image and buffered ambient data to the external device based on the availability of a transmission technology, in particular a cell phone coverage, an idle service and/or a WLAN connection.

In a preferred embodiment, the second image recognition analysis is run based on additional data sources, preferably smart phone apps and/or drone imagery, wherein preferably the additional data sources provide geographical information and/or expected phenotypical differences between regions.

According to a third aspect, a treatment device for plantation treatment of a plantation of a plantation field comprises an image capture device being adapted for taking an image of a plant field, a treatment arrangement, an image interface being adapted for providing an image captured by the image capture device to a controlling device, a treatment control interface being adapted for receiving a treatment controlling signal from the controlling device. The image interface of the treatment device is connectable to an image interface of a controlling device. The treatment control interface of the treatment device is connected to a treatment control interface of the controlling device. The treatment device is adapted to activate the treatment arrangement based on the treatment controlling signal received from the controlling device, via the treatment control interface of the treatment device.

In an example the treatment device for plantation treatment of a plantation of a plantation field comprises an image capture device being adapted for taking an image of a plant field, a controlling device according to the second aspect of the invention, a treatment arrangement, an image interface being adapted for providing an image captured by the image capture device to a controlling device, a treatment control interface being adapted for receiving a treatment controlling signal from the controlling device. The image interface of the treatment device is connectable to an image interface of a controlling device, as described herein. The treatment control interface of the treatment device is connected to a treatment control interface of the controlling device. The treatment device is adapted to activate the treatment arrangement based on the treatment controlling signal received from the controlling device, via the treatment control interface of the treatment device.

In an example, an inertial navigation unit is used alone, or in combination with a GPS unit, to determine the location, such as the location of the image capture device when specific images were acquired. Thus for example, the inertial navigation unit, comprising for example one or more laser gyroscopes, is calibrated or zeroed at a known location (such as a docking or charging station) and as it moves with the at least one camera the movement away from that known location in x, y, and z coordinates can be determined, from which the location of the at least one camera when images were acquired can be determined.

Thus, imagery can be acquired by one platform that could analyze it to detect plantation and determine which objects are to be treated, and the locations of the objects to be treated determined. For example, a UAV (unmanned aerial vehicle) can fly around a plantation field or a robotic land vehicle moves around the plantation field and acquires and analyses the imagery. Then, the information of the locations of the objects can be used by a second platform, for example a robotic land vehicle that goes to the locations of the objects and controls them, for example by applying a chemical spray at that location or mechanically extracting a weed - for example.

In an example, the image capture device comprises one or a plurality of cameras, in particular on a boom of the treatment device, wherein the image recognition unit is adapted for recognizing insects, plantation, in particular crops and/or weeds, and/or pathogens using red-green-blue RGB data and/or near infrared NIR data.

In an example, the treatment device, as described herein, further comprises a controlling device, as described herein.

In an example, the treatment device, as described herein, is designed as a smart sprayer, wherein the treatment arrangement is a nozzle arrangement.

The nozzle arrangement preferably comprises several independent nozzles, which may be controlled independently.

Advantageously, the benefits provided by any of the above aspects equally apply to all of the other aspects and vice versa. The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a schematic diagram of a plantation treatment arrangement;
Fig. 2 shows a flow diagram of a plantation treatment method;
Fig. 3 shows a schematic diagram of a controlling device;
Fig. 4 shows a schematic view of a treatment device on a plantation field; and
Fig. 5 shows a schematic view of an image with detected items.

### DETAILED DESCRIPTION OF EMBODIMENTS

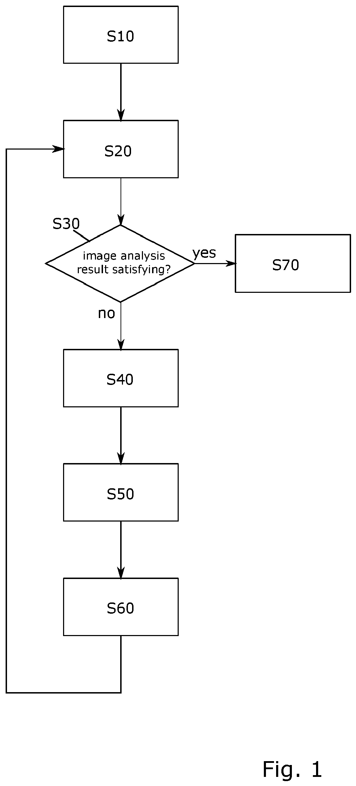

Fig. 1 shows a flow diagram of a method for plantation treatment of a plantation field 300.

Step 10 comprises taking an image 10 of a plantation of a plantation field 300.

In step 20 a first image recognition analysis of a first complexity is run on the taken image 10. The first image recognition analysis has a first complexity and is based on a stored parametrization P of a machine learning algorithm. The machines learning algorithm preferably is an artificial neural network. Thus, items 20 on the taken image 10 are recognized, at least detected and ideally identified.

In step 30, it is checked, if the first image recognition analysis provides a satisfying image analysis result R. If an item, which corresponds to an object like a crop, weed, insect or pathogen is detected but cannot be identified, the image analysis result R is unsatisfying. If the image analysis result R is satisfying, the method jumps to step 70 and the first image recognition analysis is complete and a treatment arrangement 270 of a treatment device 200 is treated based on the first image recognition analysis. If the image analysis result R is unsatisfying, the method jumps to step S40. However, the treatment arrangement 270 of the treatment device 200 is still treated based on the first recognition analysis regarding the detected and identified items 20 anyways. The not identified objects are not treated. Alternatively, the treatment arrangement 270 of the treatment device 200 is provided with a supplied map, indicating how the field has been treated in the past, and treats the plantation in the field based on the supplied map. Alternatively, no plantation is treated at all, if the image analysis result R is unsatisfying. This is the safest variation in view of potential environmental and/or economical risk.

In step S40, in addition to the image 10, ambient data 21 corresponding to the taken image 10 is determined. The ambient data 21 preferably comprises the type of crop, the growth stage of the plantation and/or illumination characteristics. All this information determining the ambient data 21 is a snapshot of the time, the image 10 was taken. The method jumps to step S50.

In step S50, a second image recognition analysis of a second complexity is run on the taken image 10 and the ambient data 21. The second complexity of the second image recognition analysis is higher than the first complexity of the first image recognition analysis. Normally, the capabilities of a device running the first image recognition analysis on a plantation field 300 are limited. Therefore, the second image recognition analysis is run on an external device 400. The second image recognition analysis is used to recognize and identify items 20 on the image 10. The second image recognition analysis is thereby run by a further machine learning algorithm. The method jumps to step S60.

In step S60, the further machine learning algorithm determines an improved parametrization PI based on the second image recognition analysis. The improved parametrization PI is then used to improve the first image recognition analysis and used to train the machine learning algorithm providing the parametrization P to the first image recognition analysis in an improved way. The method then jumps to step 20. Ideally, the first image recognition analysis was improved in such a way that it results in a satisfying image analysis result the next time such a situation occurs.

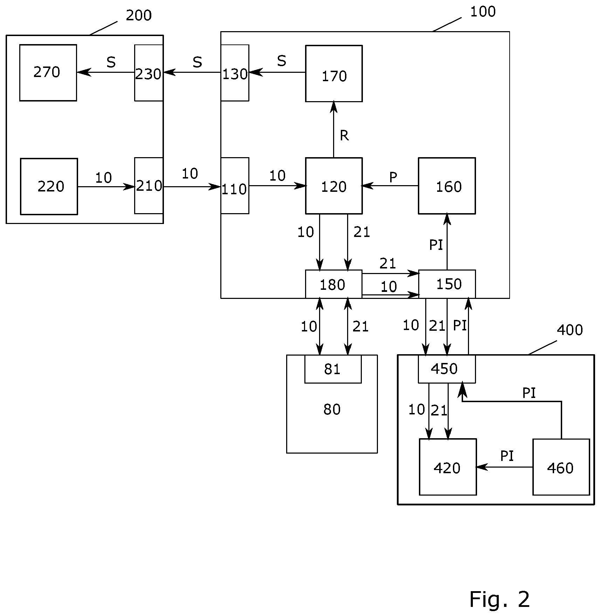

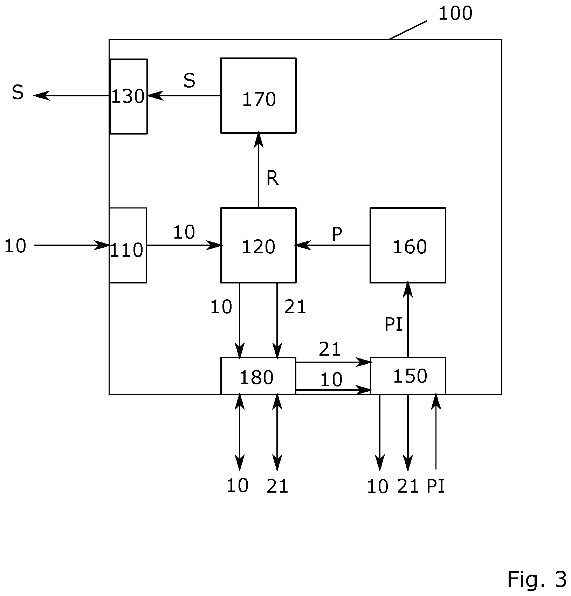

Fig. 2 shows an arrangement for plantation treatment of a plantation of a plantation field 300 and Fig. 3 shows a controlling device 100 for a treatment device 200 for plantation treatment of a plantation of a plantation field 300. Since the controlling device 100 is a part of the arrangement, both figures are described together.

A treatment device 200, preferably a smart sprayer, comprises an image capture device 220 and a treatment arrangement 270 as well as an image interface 210 and a treatment control interface 230.

The image capture device 220 comprises at least one camera, configured to take an image 10 of a plantation field 300. The taken image 10 is provided to an image interface 210 of the treatment device 200. The image interface 210 transmits the image 10 to a controlling device 100, in particular an image interface 110 of the controlling device 100.

The controlling device 100 comprises an image recognition unit 120, a machine learning unit 160 and a controlling unit 170. Additionally, the controlling device 100 comprises an image interface 110, a treatment control interface 130, a communication interface 150 and a buffer interface 180. The controlling device 100 may refer to a data processing element such as a microprocessor, microcontroller, field programmable gate array (FPGA), central processing unit (CPU), digital signal processor (DSP) capable of receiving field data, e.g. via a universal service bus (USB), a physical cable, Bluetooth, or another form of data connection. The controlling device 100 may be provided for each treatment device 200. Alternatively, the controlling device may be a central controlling device, e.g. a personal computer (PC), for controlling multiple treatment devices 200 in the field 300.

The image interface 110 receives the image 10 from the image interface 210 of the treatment device 200 and provides the image 10 to the image recognition unit 120. The image recognition unit 120 runs a first image recognition analysis based on parameters P, which are provided by the machine learning unit 160. Here the machine learning unit 160 may include trained machine learning algorithm(s), wherein the output of the machine learning algorithm(s) may be used for the image recognition. Based on the first image recognition analysis, the image recognition unit 120 determines image analysis results R. The image analysis results R, for example the recognized and identified items 20 of the analyzed image 10, are provided to the controlling unit 170. The controlling unit 170 determines a treatment controlling signal S based on the image analysis results R. For example, when the image analysis results R contain an identified weed that is harmful for the crop and has to be treated, in particular destroyed, the controlling unit 170 determines a treatment controlling signal S that instructs the treatment arrangement 270 to treat the identified weed. In this case, the treatment arrangement 270 comprising a nozzle arrangement of several independent nozzles is instructed to aim for the identified weed and the treatment arrangement 270 sprays the weed with a herbicide through the aiming nozzle. This however, can only be done for items 20, which are detected by the image recognition unit 120 and additionally identified by the image recognition unit 120. If an item 20 is detected, in other words, the image recognition unit 120 is certain that an object has been found, but the item 20 cannot be identified, the controlling unit 170 cannot determine a fitting treatment controlling signal S for this object, since it is not clear if it is a crop or a weed, or which type of insect or which type of pathogen was detected. The image recognition units 120 thus determines that the image analysis results R are unsatisfying.

In the case of an unsatisfying analysis result R, the image recognition unit 120 provides the image 10, in particular the raw data from the image capture device 220, and additionally ambient data 21 like the type of field crop, the growth stage and/or illumination characteristics, to an external device 400 via a communication interface 150 of the controlling device 100 and a communication interface 450 of the external device 400. The external device 400 preferably is an internet server.

The image 10 and the ambient data 21 are provided to an image recognition unit 420, which runs a second image recognition analysis, which is more complex than the first image recognition analysis. More complex in this case refers to more deep layers and/or different algorithms for background segmentation. In addition to the higher complexity, the second image recognition analysis is provided by additional data from additional data sources. For example, geographical information and/or expected phenotypical differences between regions can be provided by smart phone apps and/or drone imagery. The second image recognition analysis is also based on an improved parametrization PI of a machine learning algorithm of a machine learning unit 460, which based on the higher amount of input data and better quality of image recognition analysis has improved training and learning characteristics. Here the machine learning unit 460 may include trained machine learning algorithm(s), wherein the output of the machine learning algorithm(s) may be used for the improved image recognition. Therefore, the external device 400 can provide an improved parametrization PI from the machine learning unit 460 via the communication interface 450 of the external device 400 and the communication device 150 of the controlling device 100 to the machine learning unit 160 of the controlling device 100.

Based on the improved parametrization PI, the machine learning unit 160 can train and learn the machine learning algorithm in an improved way. Therefore, the provided parametrization P to the image recognition unit 120 improves the first image recognition analysis and reduce the cases of an unsatisfying image analysis result R.

The above method will be described along an exemplary embodiment as follows: For the image recognition a smart sprayer may be equipped with 10 or more cameras. The cameras may have a reaction or response time of less than 100 milliseconds and may record up to 20 and more images per second. As there is a closed control loop on the camera and the system, the sprayer is activated at almost the same moment. Image recognition with high accuracy requires large computing capacities. However, it may be expensive to install e.g. a super powerful processor for several hundred EUR/processor on each camera, so that this can be compensated by the approach of this invention. It may take about 50 to150 milliseconds from the image acquisition of the camera to the nozzle control, i.e. after about 50 to 150 milliseconds a nozzle control must already be performed after the first image analysis. A smart sprayer drives over the plantation field and sometimes it does not recognize certain weeds, single images are sent to an external server (via e.g. LTE / 5G), images are then sent to the CCU (i.e. central computing unit / central processing unit, also referred to as master unit). With the camera including the computational resources on site, for example, only 4-5 weeds (or weed classes) can be distinguished from each other. The data base however can distinguish 110 weeds. However, this requires computational power and in particular an efficient and adapted image recognition with an improved parametrization. This will be provided by an external device to which the image data are transferred for computing the updated parametrization.

However, there might be cases when it is not wanted or not possible to transmit the image 10 and/or the ambient data 21 directly to the external device 400. For example, different snapshots of images 10 and ambient data 21 should be collected before providing them to the external device 400. In another example, the external device 400 just cannot be reached by the communication interface 150 when the controlling device 100 has no access to any communication means, like WLAN or mobile data like LTE, 5G. In such cases, the image 10 and the ambient data 21 are transmitted to a buffer interface 180. The buffer interface 180 transmits the image 10 and the ambient data 21 to a buffer interface 81 of a buffer 80. The buffer 80 can be any kind of storage device, as long as it is suitable to store the received data for as long as it is needed to be stored it. When the buffered data is needed again, the buffer 80 will transmit the image 10 and the ambient data 21 back to the controlling device 100 via the buffer interface 81 of the buffer 80 and the buffer interface 180 of the controlling device 100. The image 10 and the ambient data 21 are then directly transmitted from the buffer interface 180 of the controlling device 100 via the communication interface 150 of the controlling device 100 to the communication interface 450 of the external device 400 for the second image recognition analysis. Preferably, the buffer interface 180 is provided with a trigger signal (not shown), indicating, if a transmission technology is available. Only if the trigger signal is present, the image 10 and the ambient data 21 and/or data buffered in the buffer 80 will be transmitted to the communication interface 450 of the external device 400 via the communication interface 150 of the controlling device 100. If the trigger signal is not present, the image 10 and the ambient data 21 will be transmitted to the buffer interface 81 of the buffer 80.

There may be different situations with respect to the access to the external device, i.e. the CCU (central computing unit or Connectivity Control Unit). Depending on the country a different use case is important. In some cases mobile internet is available in the field, then the time intervals between the first image analysis and the second image analysis are short (a few seconds, maximum a few minutes), while the farming machine is driving, the nozzle control can be adjusted after only a few meters (e.g. 5 or 10 meters), already by means of the "parametrization" of the second image analysis, which is used to update the parametrization of the first image recognition. In other cases there is no mobile internet available in the field, however, a CCU is installed on the farming machine, which can carry out the arithmetic operations for the second image analysis, then the time intervals between the first image analysis and the second image analysis are also short (a few seconds). While the tractor is driving, after only a few meters (e.g. 5 or 10 meters) the nozzle control can already be adapted by means of the "parametrization" of the second image analysis. In yet another cases, there is neither mobile internet available in the field, nor is a CCU installed on the farming machine, so that the second image analysis can only be carried out after the entire crop protection application has been completed. The time intervals between the first image analysis and the second image analysis can then be several hours. The time intervals between the above first image analysis, approximately 80 milliseconds after image acquisition, and the second image analysis can then be several hours and the adapted nozzle control by means of the "parametrization" of the second image analysis can be much longer, because the nozzle control is only adapted the next time "driving onto the field", this can be weeks, months or one season later.

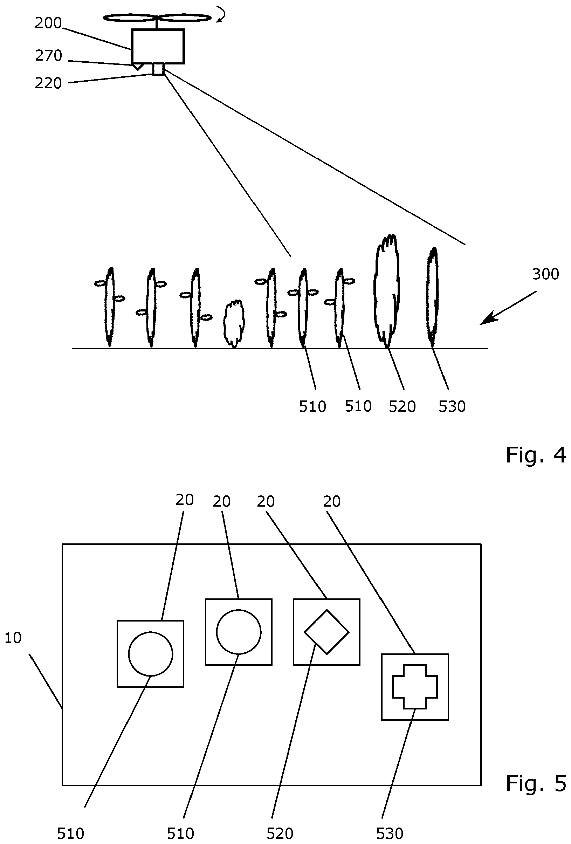

Fig. 4 shows a treatment device 200 in form of an unmanned aerial vehicle (UAV) flying over a plantation field 300 containing a crop 510. Between the crop 510 there are also a number of weeds 520, the weed 520 is particularly virulent, produces numerous seeds and can significantly affect the crop yield. This weed 520 should not be tolerated in the plantation field 300 containing this crop 510.

The UAV 200 has an image capture device 220 comprising one or a plurality of cameras, and as it flies over the plantation field 300 imagery is acquired. The UAV 200 also has a GPS and inertial navigation system, which enables both the position of the UAV 200 to be determined and the orientation of the camera 220 also to be determined. From this information, the footprint of an image on the ground can be determined, such that particular parts in that image, such as the example of the type of crop, weed, insect and/or pathogen can be located with respect to absolute geospatial coordinates. The image data acquired by the image capture device 220 is transferred to an image recognition unit 120.

The image acquired by the image capture device 220 is at a resolution that enables one type of crop to be differentiated from another type of crop, and at a resolution that enables one type of weed to be differentiated from another type of weed, and at a resolution that enables not only insects to be detected but enables one type of insect to be differentiated from another type of insect, and at a resolution that enables one type of pathogen to be differentiated from another type of pathogen.

The image recognition unit 120 may be external from the UAV 200, but the UAV 200 itself may have the necessary processing power to detect and identify crops, weeds, insects and/or pathogens. The image recognition unit 120 processes the images, using a machine learning algorithm for example based on an artificial neural network that has been trained on numerous image examples of different types of crops, weeds, insects and/pathogens, to determine which object is present and also to determine the type of object.

The UAV also has a treatment arrangement 270, in particular a chemical spot spray gun with different nozzles, which enables it to spray an herbicide, insecticide and/or fungicide with high precision.

As shown in Fig. 5, the image capture device 220 takes in image 10 of the field 300. The first image recognition analysis detects four items 20 and identifies two crops 210 (circle) and an unwanted weed 520 (rhombus). However, in addition to that an unidentified object 530 (cross) is detected. Therefore, the image recognition unit 120 of the controlling device 100 determines that the image analysis result R is unsatisfying. Based on the first image recognition analysis the unidentified object 530 cannot be treated. However, based on the first image recognition analysis at least the unwanted weed 520 can be treated by applying an herbicide by the treatment arrangement 270, in this case a chemical spot spray gun with different nozzles.

### Reference list

- 10: image
- 20: (recognized) item on image
- 21: ambient data
- 80: buffer
- 81: buffer interface
- 100: controlling device
- 110: image interface
- 120: image recognition unit
- 130: treatment control interface
- 150: communication interface
- 160: machine learning unit
- 170: controlling unit
- 180: buffer interface
- 200: treatment device, smart sprayer, UAV
- 210: image interface
- 220: image capture device
- 230: treatment control interface
- 270: treatment arrangement
- 300: plantation field
- 400: external device
- 420: image recognition unit
- 450: communication interface
- 460: machine learning unit
- 510: crop
- 520: weed
- 530: unidentified object
- P: parametrization
- PI: improved parametrization
- R: image analysis result
- S: treatment controlling signal
- S10: taking image
- S20: recognizing items by first image recognition analysis
- S30: identifying unsatisfying image analysis result
- S40: determining ambient data
- S50: recognizing items by second image recognition analysis
- S60: determining improve parametrization
- S70: controlling treatment arrangement

## Claims

1. Method for plantation treatment of a plantation field, the method comprising:
taking (S10) an image (10) of a plantation of a plantation field (300);
recognizing (S20) items (20) on the taken image (10) by running a first image recognition analysis of a first complexity on the taken image (10) based on a stored parametrization (P) of a machine learning algorithm;
identifying (S30) an unsatisfying image analysis result (R);
determining (S40) ambient data (21) corresponding to the taken image (10);
recognizing (S50) items (20) on the taken image (10) by running a second image recognition analysis of a second complexity on the image (10) based on the ambient data (21) on an external device (400), wherein the second complexity is higher than the first complexity;
determining (S60) an improved parametrization (PI) based on the second image recognition analysis for the machine learning algorithm for improving the first image recognition analysis; and
controlling (S70) - via a treatment control interface (130) - a treatment arrangement (70) of a treatment device (200) based on the first image recognition analysis on the taken image based on the updated improved parametrization.

2. Method according to claim 1, wherein
the ambient data (21) comprises a type of a field crop and/or a growth stage of the field crop and/or illumination characteristics and/or weather conditions.

3. Method according to any of the preceding claims, wherein
the unsatisfying image analysis result (R) is indicated by a low confidence of the machine learning algorithm.

4. Method according to any of the preceding claims, comprising:
buffering the image (10) and/or the ambient data (21) before running the second image recognition analysis.

5. Method according to any of the preceding claims, wherein
the buffered image (10) and/or buffered ambient data (21) are transmitted to the external device (400), preferably an internet server, based on the availability of a transmission technology, in particular a cell phone coverage, an idle service and/or a WLAN connection.

6. Method according to any of the preceding claims, wherein
the second image recognition analysis is run based on additional data sources, preferably smart phone apps and/or drone imagery; wherein preferably the additional data sources provide geographical information and/or expected phenotypical differences between regions.

7. Method according to any of the preceding claims, wherein
the second image recognition analysis is based on more layers and/or more nodes and/or different more complex algorithms for background segmentation than the first image recognition analysis.

8. A controlling device (100) for a treatment device (200) for plantation treatment of a plantation of a plantation field, comprising:
an image interface (110) being adapted for receiving an image (10) of a plantation of a plantation field;
a treatment control interface (130);
an image recognition unit (120) being adapted for recognizing items (20) on the taken image (10) by running a first image recognition analysis of a first complexity on the image based on a stored parametrization (P) of a machine learning algorithm;
the image recognition unit (120) being adapted for identifying an unsatisfying image analysis result (R);
the image recognition unit (120) being adapted for determining ambient data (21) corresponding to the taken image (10);
a communication interface (150) being adapted for transmitting the taken image (10) and the determined ambient data (21) to an external device (400) being adapted for recognizing items (20) on the taken image (10) based on the ambient data (21), wherein the second complexity is higher than the first complexity;
the communication interface (150) being adapted for receiving an improved parametrization (PI) for the machine learning algorithm for improving the first image recognition analysis from the external device (400);
a controlling unit (170) being adapted for generating a treatment controlling signal (S) for a treatment arrangement (70) of a treatment device (200) based on the improved first image recognition analysis;
the controlling unit (170) being adapted for outputting the treatment controlling signal (S) to the treatment control interface (130).

9. Controlling device according to claim 8, comprising:
a machine learning unit (160), being adapted for indicating a unsatisfying image analysis result (R) by a low confidence of the machine learning algorithm.

10. Controlling device according to any of claims 8 or 9 comprising:
a buffer interface (180), being configured for transmitting to and receiving from a buffer (80) the image (10) and the ambient data (21) before them being transmitted to the external device (400).

11. Controlling device according to any of claims 9 to 10, wherein
the communication interface (150) being adapted for transmitting the buffered image (10) and buffered ambient data (21) to the external device (400) based on the availability of a transmission technology, in particular a cell phone coverage, an idle service and/or a WLAN connection.

12. A treatment device (200) for plantation treatment of a plantation of a plantation field comprising:
an image capture device (220) being adapted for taking an image (10) of a plant field;
a treatment arrangement (60);
a controlling device according to any one of claim 8 to 11;
an image interface (210) being adapted for providing an image (10) captured by the image capture device (220) to the controlling device (100);
a treatment control interface (230) being adapted for receiving a treatment controlling signal (S) from the controlling device (100);
wherein the image interface (210) of the treatment device (200) is connectable to an image interface (110) of the controlling device (100);
wherein the treatment control interface (230) of the treatment device (200) is connected to a treatment control interface (130) of the controlling device (100);
wherein the treatment device (200) is adapted to activate the treatment arrangement (270) based on the treatment controlling signal (S) received from the controlling device (100)via the treatment control interface (230) of the treatment device (200).

13. A method for plantation treatment of a plantation field according to any of the claims 1 to 7, wherein controlling a treatment arrangement of a treatment device based on the first image recognition analysis with improved parametrization is conducted after a certain time period after controlling a treatment arrangement of a treatment device based on the first image recognition analysis with the stored parametrization has started, wherein the time period is selected from a group, the group consisting of 0 to 100 seconds, 0 to 100 minutes, 0 to 100 hours, 0 to 10 days, 0 to 10 weeks, and 0 to 12 months.

## Patentansprüche

1. Verfahren zur Plantagenbehandlung eines Plantagenfeldes, wobei das Verfahren umfasst:
Aufnehmen (S10) eines Bildes (10) einer Plantage eines Plantagenfeldes (300);
Erkennen (S20) von Elementen (20) auf dem aufgenommenen Bild (10) durch Ausführen einer ersten Bilderkennungsanalyse einer ersten Komplexität an dem aufgenommenen Bild (10) basierend auf einer gespeicherten Parametrierung (P) eines Algorithmus für maschinelles Lernen;
Identifizieren (S30) eines nicht zufriedenstellenden Bildanalyseergebnisses (R);
Bestimmen (S40) von Umgebungsdaten (21), die dem aufgenommenen Bild (10) entsprechen;
Erkennen (S50) von Elementen (20) auf dem aufgenommenen Bild (10) durch Ausführen einer zweiten Bilderkennungsanalyse einer zweiten Komplexität an dem Bild (10) basierend auf den Umgebungsdaten (21) auf einer externen Vorrichtung (400), wobei die zweite Komplexität höher als die erste Komplexität ist;
Bestimmen (S60) einer verbesserten Parametrierung (PI) basierend auf der zweiten Bilderkennungsanalyse für den Algorithmus für maschinelles Lernen zum Verbessern der ersten Bilderkennungsanalyse; und
Steuern (S70) - über eine Behandlungssteuerungsschnittstelle (130) - einer Behandlungsanordnung (70) einer Behandlungsvorrichtung (200) basierend auf der ersten Bilderkennungsanalyse des aufgenommenen Bildes basierend auf der aktualisierten verbesserten Parametrierung.

2. Verfahren nach Anspruch 1, wobei
die Umgebungsdaten (21) eine Art von Feldfrucht und/oder eine Wachstumsphase der Feldfrucht und/oder Beleuchtungscharakteristiken und/oder Wetterbedingungen umfassen.

3. Verfahren nach einem der vorhergehenden Ansprüche, wobei
das nicht zufriedenstellende Bildanalyseergebnis (R) durch ein geringes Vertrauen des Algorithmus für maschinelles Lernen angezeigt wird.

4. Verfahren nach einem der vorhergehenden Ansprüche, umfassend:
Puffern des Bildes (10) und/oder der Umgebungsdaten (21) vor dem Ausführen der zweiten Bilderkennungsanalyse.

5. Verfahren nach einem der vorhergehenden Ansprüche, wobei
das gepufferte Bild (10) und/oder die gepufferten Umgebungsdaten (21) basierend auf der Verfügbarkeit einer Übertragungstechnologie, insbesondere einer Mobilfunkabdeckung, einem Bereitschaftsdienst und/oder einer WLAN-Verbindung, an die externe Vorrichtung (400), vorzugsweise einen Internetserver, gesendet werden.

6. Verfahren nach einem der vorhergehenden Ansprüche, wobei
die zweite Bilderkennungsanalyse basierend auf zusätzlichen Datenquellen, vorzugsweise Smartphone-Apps und/oder Drohnenbildern, ausgeführt wird; wobei die zusätzlichen Datenquellen vorzugsweise geografische Informationen und/oder erwartete phänotypische Unterschiede zwischen Regionen bereitstellen.

7. Verfahren nach einem der vorhergehenden Ansprüche, wobei
die zweite Bilderkennungsanalyse auf mehr Schichten und/oder mehr Knoten und/oder verschiedenen komplexeren Algorithmen zur Hintergrundsegmentierung als die erste Bilderkennungsanalyse basiert.

8. Steuervorrichtung (100) für eine Behandlungsvorrichtung (200) zur Plantagenbehandlung einer Plantage eines Plantagenfeldes, umfassend:
eine Bildschnittstelle (110), die zum Empfangen eines Bildes (10) einer Plantage eines Plantagenfeldes ausgelegt ist;
eine Behandlungssteuerungsschnittstelle (130);
eine Bilderkennungseinheit (120), die zum Erkennen von Elementen (20) auf dem aufgenommenen Bild (10) durch Ausführen einer ersten Bilderkennungsanalyse einer ersten Komplexität an dem aufgenommenen Bild basierend auf einer gespeicherten Parametrierung (P) eines Algorithmus für maschinelles Lernen ausgelegt ist;
wobei die Bilderkennungseinheit (120) zum Identifizieren eines nicht zufriedenstellenden Bildanalyseergebnisses (R) ausgelegt ist;
wobei die Bilderkennungseinheit (120) so ausgelegt ist, dass sie Umgebungsdaten (21) bestimmt, die dem aufgenommenen Bild (10) entsprechen;
eine Kommunikationsschnittstelle (150), die zum Senden des aufgenommenen Bildes (10) und der bestimmten Umgebungsdaten (21) an eine externe Vorrichtung (400) ausgelegt ist, die zum Erkennen von Elementen (20) auf dem aufgenommenen Bild (10) basierend auf den Umgebungsdaten (21) ausgelegt ist, wobei die zweite Komplexität höher als die erste Komplexität ist;
wobei die Kommunikationsschnittstelle (150) zum Empfangen einer verbesserten Parametrierung (PI) für den Algorithmus für maschinelles Lernen zum Verbessern der ersten Bilderkennungsanalyse von der externen Vorrichtung (400) ausgelegt ist;
eine Steuereinheit (170), die zum Erzeugen eines Behandlungssteuerungssignals (S) für eine Behandlungsanordnung (70) einer Behandlungsvorrichtung (200) basierend auf der verbesserten ersten Bilderkennungsanalyse ausgelegt ist;
wobei die Steuereinheit (170) zum Ausgeben des Behandlungssteuerungssignals (S) an die Behandlungssteuerungsschnittstelle (130) ausgelegt ist.

9. Steuervorrichtung nach Anspruch 8, umfassend:
eine Einheit für maschinelles Lernen (160), die zum Anzeigen eines nicht zufriedenstellenden Bildanalyseergebnisses (R) durch ein geringes Vertrauen des Algorithmus für maschinelles Lernen ausgelegt ist.

10. Steuervorrichtung nach einem der Ansprüche 8 oder 9, umfassend:
eine Pufferschnittstelle (180), die so konfiguriert ist, dass sie das Bild (10) und die Umgebungsdaten (21) an einen Puffer (80) sendet und von diesem empfängt, bevor sie an die externe Vorrichtung (400) gesendet werden.

11. Steuervorrichtung nach einem der Ansprüche 9 bis 10, wobei:
die Kommunikationsschnittstelle (150) so ausgelegt ist, dass sie das gepufferte Bild (10) und die gepufferten Umgebungsdaten (21) basierend auf der Verfügbarkeit einer Übertragungstechnologie, insbesondere einer Mobilfunkabdeckung, einem Bereitschaftsdienst und/oder einer WLAN-Verbindung, an die externe Vorrichtung (400) sendet.

12. Behandlungsvorrichtung (200) zur Plantagenbehandlung einer Plantage eines Plantagenfeldes, umfassend:
eine Bildaufnahmevorrichtung (220), die zum Aufnehmen eines Bildes (10) eines Plantagenfeldes ausgelegt ist;
eine Behandlungsanordnung (60);
eine Steuervorrichtung nach einem der Ansprüche 8 bis 11;
eine Bildschnittstelle (210), die so ausgelegt ist, dass sie ein Bild (10), das von der Bildaufnahmevorrichtung (220) aufgenommen wird, für die Steuervorrichtung (100) bereitstellt;
eine Behandlungssteuerungsschnittstelle (230), die zum Empfangen eines Behandlungssteuerungssignals (S) von der Steuervorrichtung (100) ausgelegt ist;
wobei die Bildschnittstelle (210) der Behandlungsvorrichtung (200) mit einer Bildschnittstelle (110) der Steuervorrichtung (100) verbunden werden kann;
wobei die Behandlungssteuerungsschnittstelle (230) der Behandlungsvorrichtung (200) mit einer Behandlungssteuerungsschnittstelle (130) der Steuervorrichtung (100) verbunden ist;
wobei die Behandlungsvorrichtung (200) so ausgelegt ist,
dass sie die Behandlungsanordnung (270) basierend auf dem Behandlungssteuerungssignal (S) aktiviert, das von der Steuervorrichtung (100) über die Behandlungssteuerungsschnittstelle (230) der Behandlungsvorrichtung (200) empfangen wird.

13. Verfahren zur Plantagenbehandlung eines Plantagenfeldes nach einem der Ansprüche 1 bis 7, wobei das Steuern einer Behandlungsanordnung einer Behandlungsvorrichtung basierend auf der ersten Bilderkennungsanalyse mit verbesserter Parametrierung eine bestimmte Zeitspanne nach dem Beginn des Steuerns einer Behandlungsanordnung einer Behandlungsvorrichtung basierend auf der ersten Bilderkennungsanalyse mit der gespeicherten Parametrierung durchgeführt wird, wobei die Zeitspanne aus einer Gruppe ausgewählt wird, die 0 bis 100 Sekunden, 0 bis 100 Minuten, 0 bis 100 Stunden, 0 bis 10 Tage, 0 bis 10 Wochen und 0 bis 12 Monate umfasst.

## Revendications

1. Procédé de traitement des plantations d'un champ de plantation, le procédé comprenant les étapes suivantes :
prendre (S10) une image (10) d'une plantation d'un champ de plantation (300) ;
reconnaître (S20) des éléments (20) sur l'image prise (10) en effectuant une première analyse de reconnaissance d'image d'une première complexité sur l'image prise (10) sur la base d'une paramétrisation stockée (P) d'un algorithme d'apprentissage automatique ;
identifier (S30) un résultat d'analyse d'image insatisfaisant (R) ;
déterminer (S40) les données ambiantes (21) correspondant à l'image prise (10) ;
reconnaître (S50) des éléments (20) sur l'image prise (10) en exécutant une deuxième analyse de reconnaissance d'image d'une deuxième complexité sur l'image (10) sur la base des données ambiantes (21) sur un dispositif externe (400), la deuxième complexité étant supérieure à la première complexité ;
déterminer (S60) une paramétrisation améliorée (PI) sur la base de la deuxième analyse de reconnaissance d'image pour l'algorithme d'apprentissage automatique afin d'améliorer la première analyse de reconnaissance d'image ; et
commander (S70), par l'intermédiaire d'une interface de commande de traitement (130), un agencement de traitement (70) d'un dispositif de traitement (200) sur la base de la première analyse de reconnaissance d'image sur l'image prise en fonction de la paramétrisation améliorée mise à jour.

2. Procédé selon la revendication 1, dans lequel :
les données ambiantes (21) comprennent un type de culture et/ou un stade de croissance de la culture et/ou des caractéristiques d'éclairage et/ou des conditions météorologiques.

3. Procédé selon l'une quelconque des revendications précédentes, dans lequel :
le résultat d'analyse d'image insatisfaisant (R) est indiqué par un faible niveau de confiance de l'algorithme d'apprentissage automatique.

4. Procédé selon l'une quelconque des revendications précédentes, comprenant :
la mise en mémoire tampon de l'image (10) et/ou des données ambiantes (21) avant l'exécution de la deuxième analyse de reconnaissance d'image.

5. Procédé selon l'une quelconque des revendications précédentes, dans lequel :
l'image mise en mémoire tampon (10) et/ou les données ambiantes mises en mémoire tampon (21) sont transmises au dispositif externe (400), de préférence un serveur Internet, en fonction de la disponibilité d'une technologie de transmission, en particulier une couverture de téléphone cellulaire, un service inactif et/ou une connexion WLAN.

6. Procédé selon l'une quelconque des revendications précédentes, dans lequel :
la deuxième analyse de reconnaissance d'image est exécutée sur la base de sources de données supplémentaires, de préférence des applications pour téléphones intelligents et/ou des images de drones ; les sources de données supplémentaires fournissant de préférence des informations géographiques et/ou des différences phénotypiques attendues entre les régions.

7. Procédé selon l'une quelconque des revendications précédentes, dans lequel :
la deuxième analyse de reconnaissance d'image est basée sur un plus grand nombre de couches et/ou de noeuds et/ou d'algorithmes différents plus complexes pour la segmentation de l'arrière-plan que la première analyse de reconnaissance d'image.

8. Dispositif de commande (100) d'un dispositif de traitement (200) pour le traitement des plantations d'un champ de plantation, le dispositif comprenant :
une interface d'image (110) adaptée à la réception d'une image (10) d'une plantation d'un champ de plantation ;
une interface de commande de traitement (130) ;
une unité de reconnaissance d'image (120) adaptée à la reconnaissance d'éléments (20) sur l'image prise (10) en exécutant une première analyse de reconnaissance d'image d'une première complexité sur l'image, sur la base d'une paramétrisation stockée (P) d'un algorithme d'apprentissage automatique ;
l'unité de reconnaissance d'image (120) étant adaptée pour identifier un résultat d'analyse d'image insatisfaisant (R) ;
l'unité de reconnaissance d'image (120) étant adaptée pour déterminer les données ambiantes (21) correspondant à l'image prise (10) ;
une interface de communication (150) étant adaptée pour transmettre l'image prise (10) et les données ambiantes déterminées (21) à un dispositif externe (400) étant adapté pour reconnaître des éléments (20) sur l'image prise (10) sur la base des données ambiantes (21), la deuxième complexité étant supérieure à la première complexité ;
l'interface de communication (150) étant adaptée pour recevoir, depuis le dispositif externe (400), une paramétrisation améliorée (PI) pour l'algorithme d'apprentissage automatique afin d'améliorer la première analyse de reconnaissance d'image ;
une unité de commande (170) étant adaptée pour générer un signal de commande de traitement (S) pour un agencement de traitement (70) d'un dispositif de traitement (200) sur la base de la première analyse de reconnaissance d'image améliorée ;
l'unité de commande (170) étant adaptée pour émettre le signal de commande de traitement (S) vers l'interface de commande de traitement (130).

9. Dispositif de commande selon la revendication 8, comprenant :
une unité d'apprentissage automatique (160), adaptée pour indiquer un résultat d'analyse d'image insatisfaisant (R) par un faible niveau de confiance de l'algorithme d'apprentissage automatique.

10. Dispositif de commande selon l'une quelconque des revendications 8 ou 9, comprenant :
une interface tampon (180), configurée pour transmettre à un tampon et recevoir d'un tampon (80) l'image (10) et les données ambiantes (21) avant qu'elles ne soient transmises au dispositif externe (400).

11. Dispositif de commande selon l'une quelconque des revendications 9 et 10, dans lequel :
l'interface de communication (150) est adaptée pour transmettre l'image mise en mémoire tampon (10) et des données ambiantes mises en mémoire tampon (21) au dispositif externe (400) sur la base de la disponibilité d'une technologie de transmission, en particulier d'une couverture de téléphone cellulaire, d'un service inactif et/ou d'une connexion WLAN.

12. Dispositif de traitement (200) pour le traitement des plantations d'un champ de plantation, le dispositif comprenant :
un dispositif de capture d'image (220) adapté pour prendre une image (10) d'un champ de plantation ;
un agencement de traitement (60) ;
un dispositif de commande selon l'une quelconque des revendications 8 à 11 ;
une interface d'image (210) adaptée pour fournir une image (10) capturée par le dispositif de capture d'image (220) au dispositif de commande (100) ;
une interface de commande de traitement (230) adaptée pour recevoir un signal de commande de traitement (S) du dispositif de commande (100) ;
l'interface d'image (210) du dispositif de traitement (200) pouvant être connectée à une interface d'image (110) du dispositif de commande (100) ;
l'interface de commande de traitement (230) du dispositif de traitement (200) étant connectée à une interface de commande de traitement (130) du dispositif de commande (100) ;
le dispositif de traitement (200) étant adapté pour activer l'agencement de traitement (270) en fonction du signal de commande de traitement (S) reçu du dispositif de commande (100) par l'intermédiaire de l'interface de commande de traitement (230) du dispositif de traitement (200) .

13. Procédé de traitement des plantations d'un champ de plantation selon l'une quelconque des revendications 1 à 7, dans lequel le contrôle d'un agencement de traitement d'un dispositif de traitement basé sur la première analyse de reconnaissance d'image avec la paramétrisation améliorée est effectué après une certaine période de temps après que le contrôle d'un agencement de traitement d'un dispositif de traitement basé sur la première analyse de reconnaissance d'image avec la paramétrisation stockée a commencé, dans lequel la période de temps est sélectionnée dans un groupe, le groupe comprenant les temps suivants : de 0 à 100 secondes, de 0 à 100 minutes, de 0 à 100 heures, de 0 à 10 jours, de 0 à 10 semaines, et de 0 à 12 mois.
